# EUROPEAN PATENT APPLICATION

(11) **EP 1 924 051 A1**
(43) Date of publication of application: **21.05.2008**
(21) Application number: 07251399.7
(22) Date of filing: 30.03.2007
(51) Int. Cl.: H04L 29/06, H04L 12/18, H04N 7/15, H04M 3/56

(54) **Relational framework for non-real-time audio/video collaboration**

(30) Priority: 16.11.2006 US 600894
(71) Applicant: AVAYA TECHNOLOGY LLC, Basking Ridge, NJ 07920-2332 (US)
(72) Inventor: Gopal, Rajat, Shrewsbury, MA 01545 (US)
(74) Representative: Williams, David John

(57) **Abstract**

A method, apparatus and computer program product providing web-based time-independent conferencing for multimedia collaboration across multiple time zones. A conference is initiated, and is assigned an identification number. A conference session is initiated (102) and a session identifier is assigned (104) to the conference session, wherein the identification number and the session identifier uniquely identify a conference session. Additionally, participants are permitted to join the conference session (114) at any time and to take actions relating to the conference session such as creating sub-conferences. The relational framework used for this system allows for efficient search and playback of all sessions related to past conferences (116,118,120,122).

## Description

### BACKGROUND

A conference call is a telephone call in which three or more people converse simultaneously. Many companies use conference calls as a meeting tool or to distribute information to a large number of listeners at the same time. Conference calls connect people through a conference bridge, which is essentially a server that acts like a telephone and can answer multiple calls simultaneously. Software plays a large role in whether the bridge has capabilities beyond simply connecting multiple callers. A company can have its own bridge or can contract with a service provider for conference call hosting. Providers frequently offer add-on features for conference calls, such as attendee polling, call recording and in-call operators or attendants.

Many phone conferencing systems require a login and personal identification number (PIN) to access the system. This helps protect confidential and proprietary information during the call. In the past few years, corporations have gotten bigger and more spread out. Since offices and employees can be thousands of miles apart, getting everyone into the same room for meetings and training has become decidedly impractical for a lot of companies.

Teleconferencing is defined as the real-time exchange of information between people who are not in the same physical space. Through teleconferencing, companies can conduct meetings, customer briefs, training, demonstrations and workshops by phone or online instead of in person.

The simplest phone teleconference is a three-way call, available in many homes as a service from the telephone company. Another very simple (but not necessarily effective) method is to have two groups of people talk to one another via speakerphone. The limits of three-way calling and the sound quality of speakerphones make both of these options impractical for most businesses.

Conference calls let groups of people -- from a few to hundreds -- communicate by phone. Banks and brokerages often use conference calls to give status reports to large numbers of listeners. Other businesses use conference calls to help coworkers communicate, plan and brainstorm.

Many phone conferencing systems require a login and personal identification number (PIN) to access the system. This helps protect confidential and proprietary information during the call. Videophones can add a visual element to conference calls, but businesses often need to share other visual information. Web conferencing allows people to communicate through text and video in addition to audio. The simplest web conferencing methods use chat and instant messaging programs to host text-based group discussions. More sophisticated programs exchange visual information with web cams and streaming video. Some allow people to share documents online.

Companies can either purchase conferencing software and host their meetings themselves or use a hosting service. Hosting services provide the software and server space on which to conduct meetings. Either way, the company or the hosting service must have software to coordinate the meeting and ample server space and bandwidth to accommodate it. Web conferencing programs combine tools already common to web pages and Internet communication. They bundle these tools into one interface to create an interactive meeting environment.

### SUMMARY

Real-time audio/video conferencing is difficult for people in different time zones and for mobile workers. While there are asynchronous collaboration tools available for text communication and documents there is no effective system in the market which allows people to participate in an audio only or audio/video conference independent of time. Real-time audio/video conferencing allows people to communicate at the same time irrespective of their physical location. The presently described system and method providing non-real-time audio/video collaboration goes beyond the traditional conferencing systems by allowing people to participate in an audio/video conference independent of space and time.

The non-real-time audio/video collaboration system and method also includes a unique relational framework between the various logical components of a conferencing system - the conference itself, the conference participants, and the actions that may be taken on the conference session and message recordings by a group or individual participants.

The following two examples highlight the problem solved by this non-real-time audio/video collaboration system and method.

In a first example, a project team consists of people in Australia, Spain, Boston-US, and Seattle-US. They have to discuss a requirements document but cannot find a time to conduct an audio conference that is convenient to all.

By use of the non-real-time audio/video collaboration system and method, the team member in Australia, say Bob, logs on to the conferencing system, records a message with his comments to be played later to all participants when the conference is scheduled to begin. Later when the rest of the team enters into a conference at the scheduled time the recorded message is played to them. This team conducts the conference and records their entire session for Bob to view later. An individual conference participant also records a message for Bob with the meeting results. A notification is sent to Bob regarding both the recordings.

In a second example, a mobile worker is on a plane for a sales meeting when a videoconference is scheduled to begin. The videoconference goes ahead without her participation. After the sales meeting she logs on to the conferencing system through the hotel wireless network and accesses the recorded conference. She records her own comments and posts the message. She has a choice to set the message to be played at the beginning of the conference session scheduled for next morning or send an immediate notification to all conference participants about the pending message.

Conventional mechanisms such as those explained above suffer from a variety of deficiencies. One such deficiency is that in conventional teleconferencing solutions there is no intelligent way to keep track of various conference sessions across a period of time. While many solutions exists to intelligently manage document indexing and archiving there is a vacuum in the market for systems that can record and track various sessions relating to an audio/video conference and individual or group messages that may be recorded and posted to such sessions.

Embodiments of the invention significantly overcome such deficiencies and provide mechanisms and techniques that provide non-real-time Audio/Video collaboration. By way of embodiments of the present invention, a framework is provided for describing relationship between conference sessions, conference participants, conference recordings, and actions that can be taken on those recordings. The proposed framework consists of three entities: an Audio/Video Conference, the Conference Participants and the actions (to be taken on session or message recordings). This framework not only allows implementation of a non-real-time conferencing system but also allows grouping and viewing various recorded conference sessions and messages in a chronological and/or logical fashion. This storage system can be accessed either by a traditional PSTN phone with DTMF, with an IP audio phone, IP Video Phone or a Web browser.

In a particular embodiment of a method of providing time-independent conferencing includes initiating a conference, and assigning an identification number to the conference. A user-friendly subject name may also be assigned to the conference. The method further includes initiating a conference session and assigning a session identifier to the conference session, wherein the identification number and the session identifier uniquely identify a conference session. Additionally, the method includes permitting participants to join the conference session at any time and to take actions relating to the conference session.

Other embodiments include a computer readable medium having computer readable code thereon for providing time-independent conferencing. The computer readable medium includes instructions for initiating a conference, and assigning an identification number to the conference. The computer readable medium further includes instructions for initiating a conference session and assigning a session identifier to the conference session, wherein the identification number and the session identifier uniquely identify a conference session. Additionally, the computer readable medium includes instructions for permitting participants to join the conference session at any time and to take actions relating to the conference session.

Still other embodiments include a computerized device, configured to process all the method operations disclosed herein as embodiments of the invention. In such embodiments, the computerized device includes a memory system, a processor, communications interface in an interconnection mechanism connecting these components. The memory system is encoded with a process that provides non-real-time audio/video collaboration as explained herein that when performed (e.g. when executing) on the processor, operates as explained herein within the computerized device to perform all of the method embodiments and operations explained herein as embodiments of the invention. Thus any computerized device that performs or is programmed to perform up processing explained herein is an embodiment of the invention.

Other arrangements of embodiments of the invention that are disclosed herein include software programs to perform the method embodiment steps and operations summarized above and disclosed in detail below. More particularly, a computer program product is one embodiment that has a computer-readable medium including computer program logic encoded thereon that when performed in a computerized device provides associated operations providing non-real-time audio/video collaboration as explained herein. The computer program logic, when executed on at least one processor with a computing system, causes the processor to perform the operations (e.g., the methods) indicated herein as embodiments of the invention. Such arrangements of the invention are typically provided as software, code and/or other data structures arranged or encoded on a computer readable medium such as an optical medium (e.g., CD-ROM), floppy or hard disk or other a medium such as firmware or microcode in one or more ROM or RAM or PROM chips or as an Application Specific Integrated Circuit (ASIC) or as downloadable software images in one or more modules, shared libraries, etc. The software or firmware or other such configurations can be installed onto a computerized device to cause one or more processors in the computerized device to perform the techniques explained herein as embodiments of the invention. Software processes that operate in a collection of computerized devices, such as in a group of data communications devices or other entities can also provide the system of the invention. The system of the invention can be distributed between many software processes on several data communications devices, or all processes could run on a small set of dedicated computers, or on one computer alone.

It is to be understood that the embodiments of the invention can be embodied strictly as a software program, as software and hardware, or as hardware and/or circuitry alone, such as within a data communications device. The features of the invention, as explained herein, may be employed in data communications devices and/or software systems for such devices such as those manufactured by Avaya Inc. of Lincroft New Jersey.

### BRIEF DESCRIPTION OF THE DRAWINGS

The foregoing will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.
Figure 1 depicts a block diagram of an environment for providing non-real-time audio/video collaboration in accordance with embodiments of the invention;
Figure 2 depicts a diagram illustrating the relationships between a conference, a conferencing session, a conference sub-session and an individual participant message;
Figure 3 depicts a diagram illustrating the relationships between a conference participant set, participant subsets and individual participants;
Figure 4 depicts a diagram illustrating the relationships between different actions that can be performed;
Figure 5 depicts a diagram illustrating the relationships between a conference, sessions, sub-sessions and messages;
Figures 6A and 6B depict a flow diagram of a particular method for providing non-real-time audio/video collaboration in accordance with embodiments of the invention; and
Figure 7 illustrates an example computer system architecture for a computer system that performs in accordance with embodiments of the invention.

### DETAILED DESCRIPTION

A conference is defined as a set of sessions involving multiple participants. Each conferencing session may include none or more sub-sessions conducted by a subset of designated participants or messages posted by individual participants. Each time a conference is created it is assigned an identification number. This ID applies to all the conferencing sessions that may occur at various periods of time. A session identifier is created to identify a particular conferencing session. A combination of the conference ID and session ID uniquely identifies any conferencing session. Any conferencing session can be scheduled to begin and end at a particular time or on-demand. The conference can be thought of as a virtual "conference room" which is always open for any participant to login to the conferencing system at any time and post an audio/message or listen/view a recorded conference session or message. Thus people can participate in a conference in non-real-time.

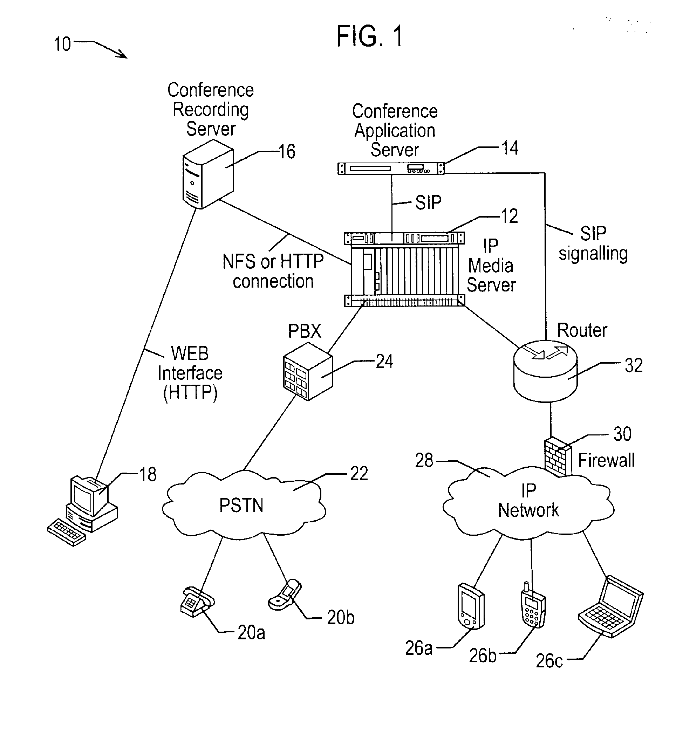

Referring now to Figure 1, a block diagram of an example environment 10 for providing non-real-time Audio/Video collaboration is shown. The environment 10 includes an IP media server 12 in communication with a conference application server 14. The communication may be by way of a protocol such as the Session Initiation Protocol (SIP). Also in communication with the IP media server 12 is conference recording server 16. Communication may be via hypertext terminal protocol (HTTP) or similar mechanism. The conference recording server 16 is also communication with a user device 18 by way of a Web interface again such as HTTP or the like. IP Media server 12 is also communication with a Public Branch eXchange (PBX) 24. The PBX is in communication via the public switched telephone network (PSTN) 22 to telephone users such as a landline user 28a or a cellular telephone user 20b. The IP media server 12 and conference application server 14 are shown in this embodiment to be in contact with a router 32. Router 32 is in communication with IP network 28 and may do so through firewall 30. The IP network 28 is in communication with computerized devices such as a Personal Digital Assistant (PDA) 26 a Blackberry type device 26 or a laptop or personal computing device 26c.

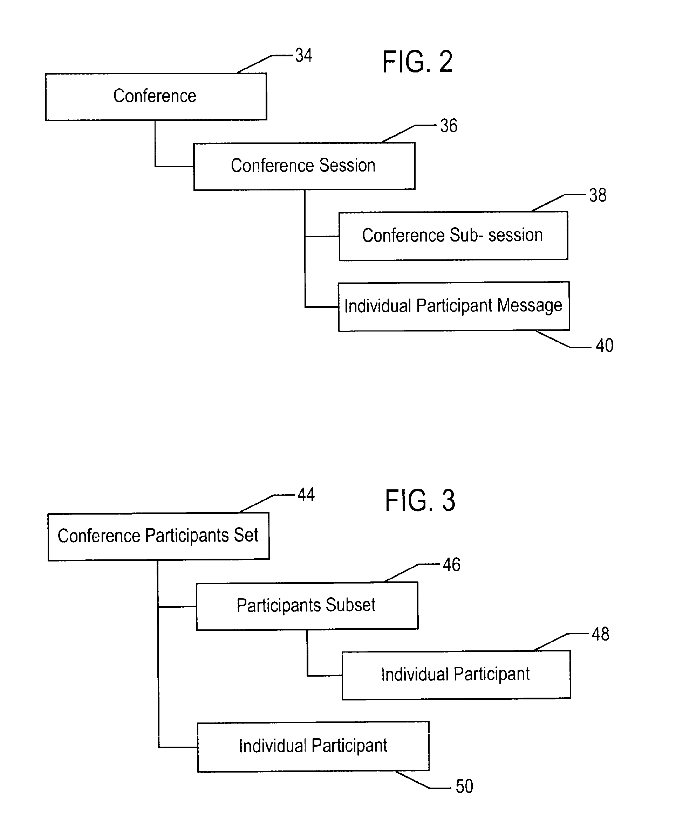

Referring now Figure 2 a conference 34 is shown in a hierarchical display. The conference 34 includes one or more conference sessions 36. Each conference session 36 can may contain a conference sub-session 38 and also contain individual participant messages 40.

Referring now to Figure 3 conference participants are shown. These include a conference participant set 44 which may include participant subsets 46 as well as an individual participant 50. The participant subset 46 may include one or more individual participants 48. The set of all people participating in a conference constitute the conference participant set. This set can consist of a participant subset or individual participants.

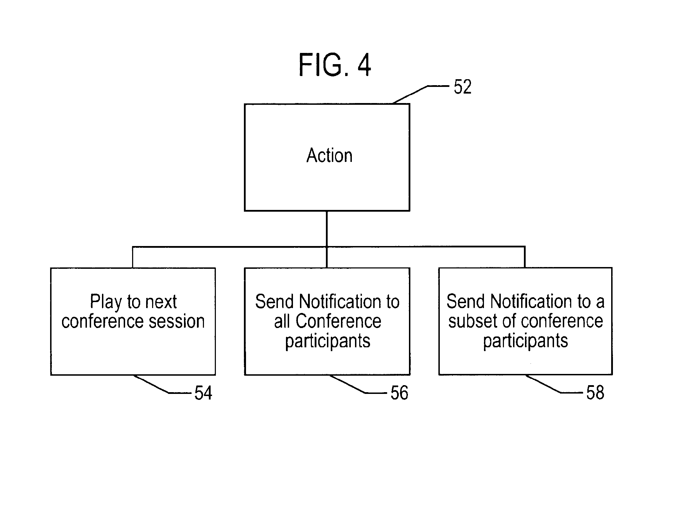

Referring now to Figure 4 the different types of actions 52 are shown. In this example embodiment, there are three types of actions that can be set on the conference session or message recordings. The first action 54 shows wherein the recording can be set to start playing automatically to all participants when the next scheduled conferencing session begins. A second action 56 shows wherein the recording can be posted into the system and a notification is sent to all conference participants to view it at a time of their choosing. The third action 58 shows wherein the recording can be posted into the system and a notification is sent to an individual to a subset of the conference participants to view it. Access rights may be enabled to limit visibility or viewing by other participants.

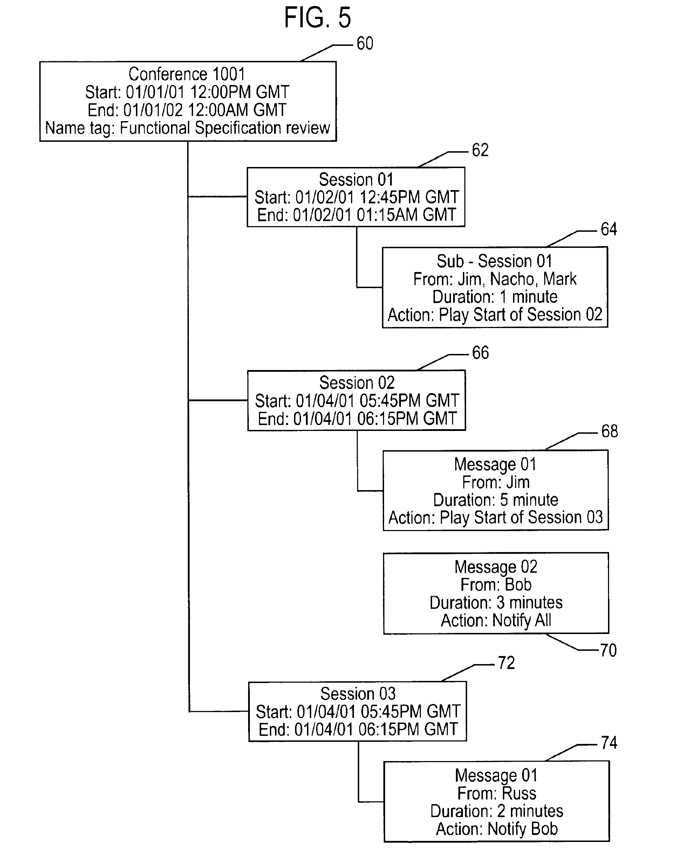

Referring now to Figure 5, an example conference recording storage view illustrates the audio/video recording storage and retrieval system. A conference 60 is shown. The conference includes three different sessions. Conference 60 includes a Name tag: Functional Specification review. A first session 62 includes a single sub-session 64 having different participants, different durations, and a specific action. A second session 66 in this instance includes two messages. A first message 68 from a participant has a duration and also has action associated therewith. A second message 70 from a different participant, having a different duration, and a different action is also shown. The third session 72 also includes a single message 70. This message is from a different participant than message 68 or 70 and also has an action of notifying another participant.

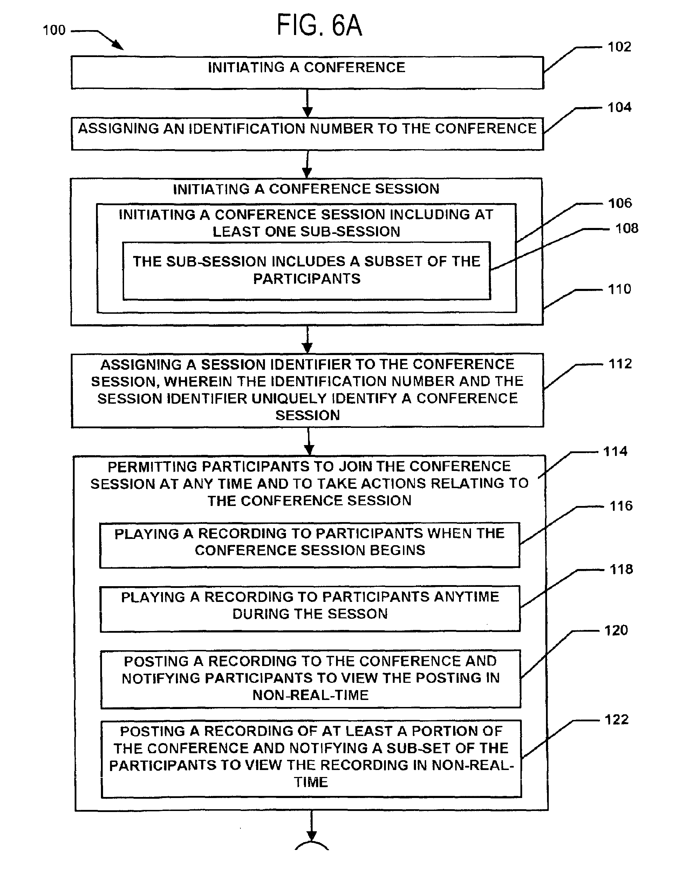

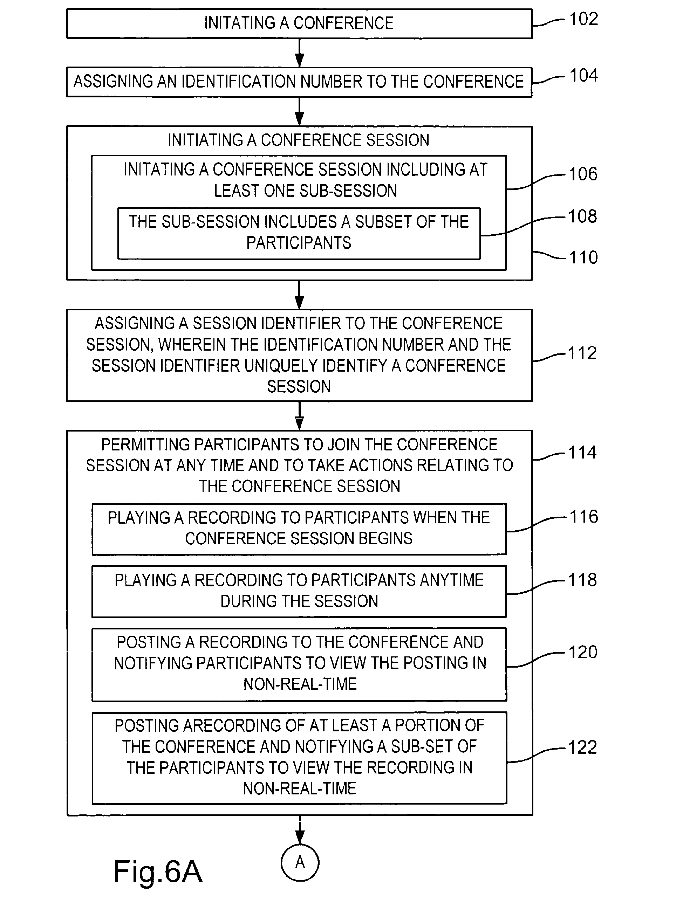

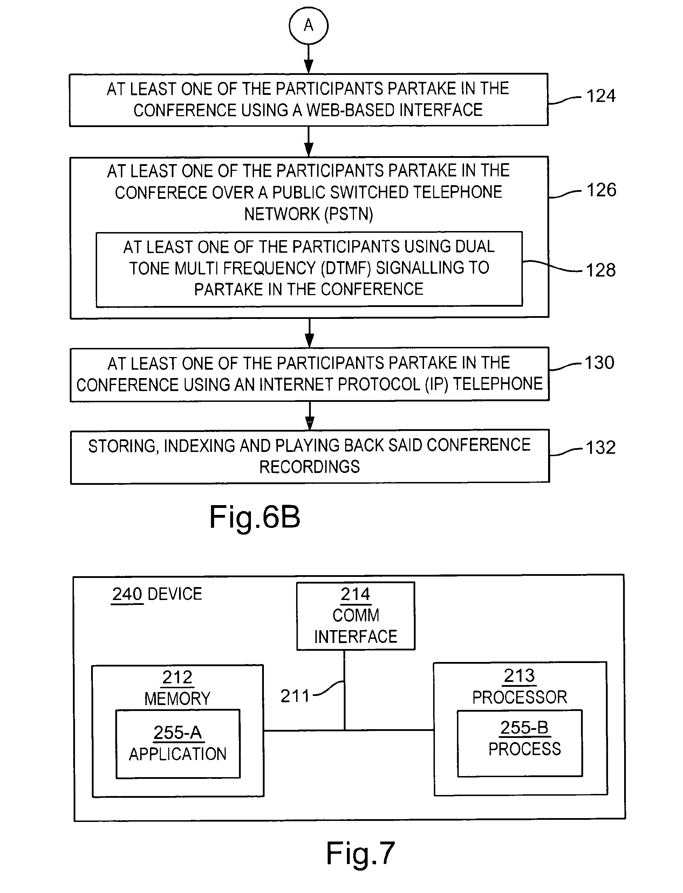

A flow chart of the presently disclosed method is depicted in Figures 6A and 6B. The rectangular elements are herein denoted "processing blocks" and represent computer software instructions or groups of instructions. The diamond shaped elements, are herein denoted "decision blocks," represent computer software instructions, or groups of instructions which affect the execution of the computer software instructions represented by the processing blocks.

Alternatively, the processing and decision blocks represent steps performed by functionally equivalent circuits such as a digital signal processor circuit or an application specific integrated circuit (ASIC). The flow diagrams do not depict the syntax of any particular programming language. Rather, the flow diagrams illustrate the functional information one of ordinary skill in the art requires to fabricate circuits or to generate computer software to perform the processing required in accordance with the present invention. It should be noted that many routine program elements, such as initialization of loops and variables and the use of temporary variables are not shown. It will be appreciated by those of ordinary skill in the art that unless otherwise indicated herein, the particular sequence of steps described is illustrative only and can be varied without departing from the spirit of the invention. Thus, unless otherwise stated the steps described below are unordered meaning that, when possible, the steps can be performed in any convenient or desirable order.

Referring now to Figures 6A and 6B, a particular embodiment of a method 100 of providing time-independent conferencing is shown. The method 100 begins with processing block 102 which discloses initiating a conference. Processing block 104 recites assigning an identification number to the conference.

Processing block 106 which discloses initiating a conference session. This may include, as shown in processing block 108 wherein the initiating a conference session comprises initiating a conference session including at least one sub-session. This may further include, as stated in processing block 110 wherein the sub-session includes a subset of the participants.

Processing block 112 discloses assigning a session identifier to the conference session, wherein the identification number and the session identifier uniquely identify a conference session

Processing block 114 permitting participants to join the conference session at any time and to take actions relating to the conference session. As shown in processing block 116 the actions include playing a recording to participants when the conference session begins. As further shown in processing block 118, the actions may also include playing a recording to participants during the sessi0on. Typically this is permitted by the moderator/operator or an authorized participant. The actions may also include, as recited in processing block 120, posting a recording to the conference and notifying participants to view the posting in non-real-time. The actins may further include, as described in processing block 122, posting a recording of at least a portion of the conference and notifying a sub-set of the participants to view the recording in non-real-time.

Processing continues with processing block 124 which recites wherein at least one of the participants partakes in the conference using a web-based interface. Processing block 126 discloses wherein at least one of the participants partake in the conference over a Public Switched Telephone Network (PSTN), which may further include the participants using Dual Tone Multi Frequency (DTMF) signaling to partake in the conference, as disclosed in processing block 128. Processing block 130 states wherein at least one of the participants partakes in the conference using an Internet Protocol (IP) telephone. Processing block 132 recites the actions of storing, indexing and playing back the conference recordings.

Figure 7 illustrates example architectures of a computer system that is configured as a host computer system 240. The computer system 240 may be any type of computerized system such as a personal computer, workstation, portable computing device, mainframe, server or the like. In this example, the system includes an interconnection mechanism 211 that couples a memory system 212, a processor 213, and a communications interface 214. The communications interface 214 allows the computer system 240 to communicate with external devices or systems.

The memory system 212 may be any type of computer readable medium that is encoded with an application 255-A that represents software code such as data and/or logic instructions (e.g., stored in the memory or on another computer readable medium such as a disk) that embody the processing functionality of embodiments of the invention as explained above. The processor 213 can access the memory system 212 via the interconnection mechanism 211 in order to launch, run, execute, interpret or otherwise perform the logic instructions of the applications 255-A for the host in order to produce a corresponding process 255-B. In other words, the process 255-B represents one or more portions of the application 255-A performing within or upon the processor 213 in the computer system.

It is to be understood that embodiments of the invention include the applications (i.e., the un-executed or non-performing logic instructions and/or data) encoded within a computer readable medium such as a floppy disk, hard disk or in an optical medium, or in a memory type system such as in firmware, read only memory (ROM), or, as in this example, as executable code within the memory system 212 (e.g., within random access memory or RAM). It is also to be understood that other embodiments of the invention can provide the applications operating within the processor 213 as the processes. While not shown in this example, those skilled in the art will understand that the computer system may include other processes and/or software and hardware components, such as an operating system, which have been left out of this illustration for ease of description of the invention.

Having described preferred embodiments of the invention it will now become apparent to those of ordinary skill in the art that other embodiments incorporating these concepts may be used. Additionally, the software included as part of the invention may be embodied in a computer program product that includes a computer useable medium. For example, such a computer usable medium can include a readable memory device, such as a hard drive device, a CD-ROM, a DVD-ROM, or a computer diskette, having computer readable program code segments stored thereon. The computer readable medium can also include a communications link, either optical, wired, or wireless, having program code segments carried thereon as digital or analog signals. Accordingly, it is submitted that that the invention should not be limited to the described embodiments but rather should be limited only by the spirit and scope of the appended claims.

## Claims

1. A method of providing time-independent conferencing, comprising:
initiating a conference;
assigning an identification number to said conference;
initiating a conference session;
assigning a session identifier to said conference session, wherein said identification number and said session identifier uniquely identify a conference session; and
permitting participants to join said conference session at any time and to take actions relating to said conference session.

2. The method of claim 1 wherein said initiating a conference session comprises initiating a conference session including at least one sub-session.

3. The method of claim 2 wherein said sub-session includes a subset of said participants.

4. The method of claim 1 wherein said actions include at least one of playing a recording to participants when said conference session begins and playing a recording anytime during the session.

5. The method of claim 1 wherein said actions include posting a recording to said conference and notifying participants to view said posting in non-real-time.

6. The method of claim 1 wherein said actions include posting a recording of at least a portion of said conference and notifying a sub-set of said participants to view said recording in non-real-time.

7. The method of claim 1 wherein at least one of said participants partake in said conference using a web-based interface.

8. The method of claim 1 wherein at least one of said participants partake in said conference over a Public Switched Telephone Network (PSTN) using Dual Tone Multi Frequency (DTMF) signaling.

9. The method of claim 1 wherein at least one of said participants partake in said conference using an Internet Protocol (IP) telephone.

10. The method of claim 1 further comprising storing, indexing and playing back said conference recordings in a logical fashion.

11. A computer readable medium having computer readable code thereon for providing time-independent conferencing, the medium comprising:
instructions for initiating a conference;
instructions for assigning an identification number to said conference;
instructions for initiating a conference session;
instructions for assigning a session identifier to said conference session, wherein said identification number and said session identifier uniquely identify a conference session; and
instructions for permitting participants to join said conference session at any time and to take actions relating to said conference session.

12. The computer readable medium of claim 11 wherein said instructions for initiating a conference session comprises instructions for initiating a conference session including at least one sub-session.

13. The computer readable medium of claim 12 wherein said instructions for initiating a conference session including at least one sub-session includes instructions for including a subset of said participants.

14. The computer readable medium of claim 11 wherein said instructions for actions include instructions for at least one of playing a recording to participants when said conference session begins and playing a recording anytime during the session.

15. The computer readable medium of claim 11 wherein said instructions for actions include instructions for posting a recording to said conference and instructions for notifying participants to view said posting in non-real-time.

16. The computer readable medium of claim 11 wherein said instructions for actions include instructions for posting a recording of at least a portion of said conference and instructions for notifying a sub-set of said participants to view said recording in non-real-time.

17. The computer readable medium of claim 11 further comprising instructions wherein at least one of said participants partake in said conference using a web-based interface.

18. The computer readable medium of claim 11 further comprising instructions wherein at least one of said participants partake in said conference over a Public Switched Telephone Network (PSTN) using Dual Tone Multi Frequency (DTMF) signaling to partake in said conference.

19. The computer readable medium of claim 11 further comprising instructions wherein at least one of said participants partake in said conference using an Internet Protocol (IP) telephone.

20. The computer readable medium of claim 11 further comprising instructions for storing, indexing and playing back said conference recordings in a logical fashion.

21. A time-independent conferencing system comprising:
a media server capable of communication with a telephone network and a computer network;
a conference application server in communication with said media server; and
a conference recording server in communication with said media server and capable of communicating with a user by way of a web interface, and wherein said time independent conferencing system assigns an identification number to said conference session, assigns a session identifier to said conference session, wherein said identification number and said session identifier uniquely identify a conference session; and permits participants to join said conference session at any time and to take actions relating to said conference session.

22. A relational framework for time-independent conferencing system comprising:
means for storage and retrieval of conference sessions using indexing based on a conference identifier and friendly name tags; and
means for playing back of at least a portion of all sessions related to a given conference over a period of time.

23. A media server comprising:
a memory;
a processor;
a communications interface;
an interconnection mechanism coupling the memory, the processor and the communications interface; and
wherein the memory is encoded with an application providing time-independent conferencing, that when performed on the processor, provides a process for processing information, the process causing the media server to perform the operations of:
initiating a conference;
assigning an identification number to said conference;
initiating a conference session;
assigning a session identifier to said conference session, wherein said identification number and said session identifier uniquely identify a conference session; and
permitting participants to join said conference session at any time and to take actions relating to said conference session.
